# EUROPÄISCHE PATENTSCHRIFT

(11) **EP 1 245 468 B1**
(45) Veröffentlichungstag und Bekanntmachung des Hinweises auf die Patenterteilung: **04.10.2006**
(21) Anmeldenummer: 02002159.8
(22) Anmeldetag: 29.01.2002
(51) Int. Cl.: B61D 3/10, B62D 47/02, B60D 5/00

(54) **Gelenk zwischen zwei Fahrzeugen oder Fahrzeugteilen (Stichwort: "Drehpendelgelenk")**
Joint between two vehicles or vehicle parts (Keyword: "rotary pendulum joint")
Articulation entre deux véhicules ou parties de véhicule (Mot clef: "articulation à pendule tournant")

(30) Priorität: 29.03.2001 DE 10115767; 25.01.2002 EP 02001780
(43) Veröffentlichungstag der Anmeldung: 02.10.2002
(73) Patentinhaber: HÜBNER GmbH, 34123 Kassel (DE)
(72) Erfinder: Gumpert, Horst J., 38226 Salzgitter 1 (DE); Karasek, Jens, 34260 Kaufungen (DE); Koch, Robert, 37242 Bad Sooden Allendorf (DE)
(74) Vertreter: WALTHER, WALTHER & HINZ Patentanwälte - European Patent Attorneys

(56) Entgegenhaltungen:
- EP-A- 0 045 889
- DE-A- 4 231 323
- US-A- 4 405 143

## Beschreibung

Die Erfindung betrifft eine Gelenkvorrichtung zwischen zwei Fahrzeugen oder Fahrzeugteilen, z. B. bei einem Gelenkbus oder einem Schienenfahrzeug, wobei die Gelenkvorrichtung mindestens zwei Gelenkglieder aufweist, die beabstandet zur Mittellängsachse des Fahrzeuges angeordnet sind, sowie mindestens einen, vorzugsweise zwei Gelenkarme, die um die beiden Gelenkglieder drehbar gelagert sind.

Gelenke zwischen zwei Fahrzeugen oder Fahrzeugteilen, beispielsweise bei einem Gelenkbus, sind hinreichend bekannt. Hierbei ist ein zentrales Gelenk in Form eines Knickgelenkes vorgesehen, mit einer in der Mittellängsachse des Fahrzeuges angeordneten zentralen Achse. Um diese Achse knickt das Fahrzeug bei Kurvenfahrt ein.

Nachteilig bei den bekannten Knickgelenken ist, dass auf Grund der Erstreckung des Gelenkes zwischen den beiden Fahrzeugen oder Fahrzeugteilen ein Abstand von etwa 1.600 mm erforderlich ist. Da der Raum, den das Gelenk zwischen den beiden Fahrzeugen oder Fahrzeugteilen in Anspruch nimmt, vom Grundsatz her nur ein beschränkt nutzbarer Raum ist, besteht ein Interesse daran, diesen Raum und damit den Abstand zwischen den beiden Fahrzeugen oder Fahrzeugteilen zu minimieren, um gegebenenfalls eine weitere Sitzreihe in den Fahrzeugen oder Fahrzeugteilen unterbringen zu können.

Aus der US 4,405,143 ist ein Gelenk bekannt, das ein Gelenkmittelteil aufweist, an dem die Gelenkglieder, die an den Fahrzeugteilen befestigt sind, angeordnet sind. Vom Grundsatz her handelt es sich hierbei um ein Doppelgelenk, da die beiden Fahrzeugteile jeweils eine unterschiedliche Winkelstellung zu dem Gelenkmittelteil einnehmen können. Bedingt durch das Gelenkmittelteil baut das Gelenk sehr lang.

Auch das aus der EP 0 045 889 (entsprechend US 4,421,339) bekannte Gelenk baut sehr lang, da das Gelenk durch ein bekanntes Drehschemelgelenk gebildet wird, wobei zu beiden Seiten des Drehschemels Gelenkarme vorgesehen sind, um Vertikalkräfte aufzunehmen.

Die US 5,052, 707 zeigt ein nach Art eines Scherengestells ausgebildetes Gelenk, das zum einen durch eine sehr aufwändige Konstruktion gekennzeichnet ist und zum anderen viel Platz zwischen den Fahrzeugteilen benötigt.

Die US 4,241,270 zeigt einen zweiphasigen Elektromotor mit einem geschlossenen Getriebe.

Der Erfindung liegt daher die Aufgabe zu Grunde, eine Gelenkvorrichiung, insbesondere eine Knickvorrichtung, bereitzustellen, durch die der Abstand zwischen den beiden Fahrzeugen oder Fahrzeugteilen, die durch die Gelenkvorrichtung miteinander verbunden sind, gegenüber einem herkömmlichen Knickgelenk vermindert werden kann.

Die Aufgabe wird erfindungsgemäß dadurch gelöst, dass die Gelenkglieder jeweils durch einen Schlitten quer zur Mittellängsachse des Fahrzeuges verschieblich aufnehmbar sind, wobei der Schlitten durch eine Konsolführung mit dem einen Fahrzeug oder Fahrzeugteil verbunden ist, wobei die beiden Gelenkarme an ihrem anderen Ende mit dem anderen Fahrzeug oder Fahrzeugteil durch ein Drehgelenk verbunden sind, das in der Mittellängsachse des Fahrzeuges angeordnet ist. Hieraus wird deutlich, dass die Knickbewegung der Gelenkvorrichtung zweistufig abläuft. Zum Einen wird durch die drehgelenkige Verbindung der Gelenkglieder mit dem anderen Fahrzeug oder Fahrzeugteil durch das in der Mittellängsachse angeordnete Drehgelenk ein bestimmter Knickwinkel erlaubt, nämlich vorzugsweise ein Knickwinkel bis zu 15°. Wird ein höherer Knickwinkel erforderlich, was beispielsweise dann der Fall ist, wenn ein derartiger Bus enge Kurven durchfahren muss, dann erfolgt durch die Verschiebung eines der Gelenkglieder quer zur Mittellängsachse des Fahrzeuges eine weitere Vergrößerung des Knick-winkels. Dies dadurch, dass sich je nachdem, welche Kurve durchfahren wird, das eine Gelenkglied, mit z. B. einer vertikal ausgerichteten Achse, an dem der eine Gelenkarm angeordnet ist, auf das andere Gelenkglied mit dem anderen Gelenkarm zu bewegt. Hierbei pendelt der Gelenkarm um das entsprechende Gelenkglied. Das heißt, dass hierbei der Abstand zwischen den beiden Fahrzeugen oder Fahrzeugteilen kurvenaußenseitig vergrößert wird, wobei das Maß der Vergrößerung des Abstandes zwischen den beiden Fahrzeugen oder Fahrzeugteilen danach bemessen wird, inwieweit sich das Gelenkglied, an dem der eine Gelenkarm angeordnet ist, auf den anderen Gelenkarm zu bewegen kann. Die Vergrößerung des Abstandes zwischen den beiden Fahrzeugen bzw. Fahrzeugteilen ist hierbei zusätzlich noch abhängig von der Länge der Gelenkarme.

Grundlage für diese zweistufige Einknickung der Gelenkvorrichtung bildet die Erkenntnis, dass bei 90 % der Fahrzeit eines Gelenkbusses ein Knickwinkel von lediglich maximal 15° realisiert werden muss. Nur in Ausnahmefällen sind größere Knickwinkel erforderlich, wobei sich ebenfalls herausgestellt hat, dass Knickwinkel über 26° nicht vorkommen. Der Winkel von 26° entspricht im Übrigen auch dem maximalen Knickwinkel eines Gelenkes aus dem bekannten Stand der Technik.

Es hat sich herausgestellt, dass auch durch diese spezielle Konstruktion des Gelenkes der Abstand zwischen den beiden Fahrzeugen bzw.
Fahrzeugteilen von ursprünglich 1.600 mm auf weniger als 1.100 mm reduziert werden kann. Die Länge des Balges beträgt im eingebauten Zustand lediglich ca. 800 mm. Dies ermöglicht die Anordnung einer weiteren Sitzreihe in einem der Fahrzeuge bzw. Fahrzeugteile.

Bekanntermaßen ist im Bereich des Gelenkes ein Übergang vorgesehen, der ein Hinüberwechseln von einem Fahrzeug zum anderen erlaubt. Der Übergang umfasst eine Übergangsbrücke und einen Balg, der sowohl die Brücke, als auch das Gelenk tunnelartig umgibt.

Auch hier gelten die Vorteile in Bezug auf die Ausgestaltung und die Haltbarkeit des Balges wie sie bei der ersten Variante dargestellt wurden. Insbesondere wird der Balg kürzer. Auf Grund der Knickkinematik erfährt der Balg einen nur geringen Querversatz, was die Haltbarkeit positiv beeinflusst. Durch den geringen Querversatz, den der Balg erfährt, kann er steifer ausgebildet werden, wodurch er insbesondere nach unten weniger stark ausbaucht.

Weitere vorteilhafte Merkmale sind den Unteransprüchen 2 bis 13 zu entnehmen.

Vorteilhaft ist der Schlitten auf einer Konsolführung, hier insbesondere auf einer Konsolführung, die eine Rundführung aufweist, angeordnet, die mit dem einen Fahrzeug bzw. Fahrzeugteil verbunden ist. Eine derartige Konsolführung mit einer Rundführung hat den Vorteil, dass durch diese Konsolführung der Schlitten vertikal verschwenkbar aufnehmbar ist, so dass die Gelenkvorrichtung insgesamt in der Lage ist, Nickbewegungen nachzugeben, wie sie beispielsweise auftreten, wenn derartige Gelenkfahrzeuge eine Senke oder eine Kuppe durchfahren bzw. überfahren.

An dem anderen Fahrzeug oder Fahrzeugteil ist eine Konsole für das Drehgelenk vorgesehen, durch das die Gelenkarme drehgelenkig aufnehmbar sind.

Zur Dämpfung der Drehbewegung der Gelenkarme um das Drehgelenk ist eine Dämpfungseinrichtung vorgesehen. Eine derartige Dämpfungseinrichtung umfasst mindestens einen Dämpfer, der einerseits an dem Gelenkarm und andererseits mit dem Fahrzeug bzw. Fahrzeugteil oder der Konsole verbunden ist. Ein solcher Dämpfer, der vorteilhaft als doppeltwirkender Dämpfer ausgebildet ist, sorgt beispielsweise dafür, dass bei Geradeausfahrt des Fahrzeuges das hintere Fahrzeugteil, wenn es sich um einen sogenannten Puscher handelt, also ein Fahrzeug, bei dem die letzte, hintere Achse angetrieben wird, nicht seitlich ausbricht. Vorteilhaft ist hierbei weiterhin vorgesehen, dass die Konsole bzw. der Gelenkarm derart ausgebildet ist, dass der Dämpfer bei Schwenkbewegung des Gelenkes in die Konsole oder den Gelenkarm eintaucht, mithin der volle Knickwinkel zur Verfügung steht.

Vorteilhaft ist weiterhin nach einem Merkmal der Erfindung vorgesehen, dass zwischen Schlitten und Gelenkarm ein Dämpfungsglied vorgesehen ist. Alternativ kann ein Dämpfungsglied zwischen den Gelenkarmen oder besser zwischen den Schlitten angeordnet sein. Da bei der Anordnung jeweils eines Dämpfungsgliedes zwischen Schlitten und Gelenkarm in der Summe zwei derartige Dämpfungsglieder erforderlich sind, ist die Ausführungsform mit einem, dann doppeltwirkenden Dämpfungsglied zwischen den Schlitten bzw. Gelenkarmen preiswerter. Diese Dämpfungsglieder bzw. das eine Dämpfungsglied haben primär die Aufgabe dafür zu sorgen, dass die zweite Stufe der Einknickung erst dann erfolgt, wenn durch das Drehgelenk die 15°-Grenze für den Knickwinkel als erste Stufe erreicht worden ist. Bis zu dem Knickwinkel von 15° werden die Schlitten durch das bzw. die Dämpfungsglieder in ihrer Stellung arretiert. Nach Erreichen des Knickwinkels von 15° wird das bzw. die Dämpfungsglieder weicher mit der Folge, dass entsprechend der zu durchfahrenden Kurve, der jeweilige Schlitten sich auf der Konsolführung auf den anderen Schlitten zu bewegt. Zwar bewirkt das bzw. bewirken die Dämpfungsglieder auch bei einem Knickwinkel von über 15° eine gewisse, wenn auch nur geringe Dämpfungswirkung; der wesentliche Dämpfungsanteil wird aber durch den entsprechend der Kurvenrichtung tätigen Dämpfer erbracht. Dies ist der Dämpfer, der sich kurvenaußenseitig befindet.

Wie bereits an anderer Stelle beschrieben, kann die Konsolführung nach Art einer Rundführung ausgebildet sein, so dass der Schlitten, der durch die Rundführung aufgenommen ist, vertikal verschwenkbar ist. Um alternativ derartige Nickbewegungen nachgeben zu können, kann vorgesehen sein, dass die Konsole an dem anderen Fahrzeug um eine horizontale Achse verschwenkbar ausgebildet ist. In einem solchen Fall könnte die Konsolführung für den Schlitten auch in vertikaler Richtung starr ausgebildet sei. Konsolführung und Konsole können auch gleichzeitig den Querträger des Chassis des Fahrzeuges bzw. Fahrzeugteiles bilden, um so zum Einen Gewicht und zum Anderen Kosten zu sparen. Um kleinere Wankbewegungen aufnehmen zu können, ist vorteilhaft vorgesehen, dass der Schlitten eine elastische Gleitbuchse zur Aufnahme durch die Rundführung aufweist.

Anhand der Zeichnungen werden die beiden Varianten der Erfindung mit ihren Ausführungsformen nachstehend beispielhaft näher erläutert.
- Figur 1: zeigt die erfindungsgemäße Gelenkvorrichtung Geradeausfahrt des Gelenkfahrzeuges;
- Figur 2: zeigt die Gelenkvorrichtung gemäß Fig. 1 bei einem Lenkwinkel von 15°;
- Figur 3: zeigt die Gelenkvorrichtung gemäß Fig. 1 bei einem Lenkwinkel von 15° und zusätzlich einem Pendelwinkel von 11°;
- Figur 4: zeigt eine Variante einer Gelenkvorrichtung bei Geradeausfahrt des Gelenkfahrzeuges;
- Figur 5: zeigt die Gelenkvorrichtung gemäß Fig. 4 bei einem Lenkwinkel von 15°;
- Figur 6: zeigt die Gelenkvorrichtung gemäß Fig. 4 bei einem Lenkwinkel von 15° und einem Pendelwinkel von 11°;

Die insgesamt mit 100 bezeichnete Getenkvorrichtung befindet sich zwischen dem schematisch angedeuteten Vorderwagen 102 und dem ebenfalls schematisch angedeuteten Hinterwagen 103. An dem Vorderwagen 103 ist die Konsolführung 110 angelenkt, die die beiden Schlitten 111 und 112 quer zur Längsachse 50 verschieblich aufnimmt. An den Schlitten 111 und 112 sind die beiden Gelenkarme 113 und 114 mittels der als Pendelgelenke ausgebildeten Gelenkglieder 111a und 112a angelenkt. Im Speziellen umfasst das Pendelgelenk 111a und 112a eine vertikal ausgerichtete Achse, um die die Gelenkarme 113 und 114 dreh- oder schwenkbeweglich angeordnet sind. Die Gelenkarme 113 und 114 sind an ihrem anderen Ende durch das Drehgelenk 120 miteinander verbunden. Dieses Drehgelenk 120 ist Bestandteil der Konsole 130, die wiederum an dem Vorderwagen 102 angeordnet ist. Die Verbindung der Konsole 130 zum Vorderwagen 102 erfolgt durch die Gelenklager 135, 136, die jeweils eine horizontal ausgerichtete Achse aufweisen, durch die die Konsole 130 vertikal beweglich aufgenommen wird, so dass das Fahrzeug in der Lage ist, Senken und Kuppen zu durchfahren bzw. zu überfahren. Dieses Schwenklager 135, 136 ist als Metall-Gummilager ausgebildet, so dass die Verbindung zwischen den beiden Fahrzeugen im gewissen Umfang elastisch nachgiebig ausgebildet ist.

Des Weiteren ist eine Dämpfungseinrichtung 140 mit den beiden Dämpfern 141 vorgesehen, wobei ein jeder dieser Dämpfer einerseits mit dem Gelenkarm 113, 114 und andererseits mit der Konsole 130 verbunden ist. Diese Dämpfer 141 sind als doppeltwirkende Hydraulik-Zylinder ausgebildet und sorgen schlussendlich für die Stabilität bzw. Steifigkeit des Gelenkes.

Des Weiteren sind Dämpfungsglieder 160 in Form von Hydraulik-Zylindern vorgesehen, die zwischen dem Schlitten 111, 112 einerseits und dem Gelenkarm 113, 114 andererseits angeordnet sind. Die Funktion der Dämpfungsglieder 160 besteht hauptsächlich darin dafür zu sorgen, dass bis zu einem Knickwinkel von 15° die Schlitten 111, 112 in ihrer äußeren Endstellung verbleiben, also sich nicht aufeinander zu bewegen. Erst nach Ausschöpfung des kompletten Knickwinkels von 15° durch Verschwenken der Gelenkarme um das Drehgelenk 120 werden die Dämpfungsglieder 160 so nachgiebig gestaltet, dass sich der jeweilige Schlitten - entsprechend der zu durchfahrenden Kurve - auf die Mittellängsachse 50, also in Richtung auf den anderen Schlitten zu bewegt. Das entsprechende Dämpfungsglied 160 übt hierbei in gewissem, geringen Umfang eine Dämpfungswirkung aus, jedoch erfolgt die hauptsächliche Dämpfung durch den jeweiligen Dämpfer 141, entsprechend der Kurve, die durchfahren wird.

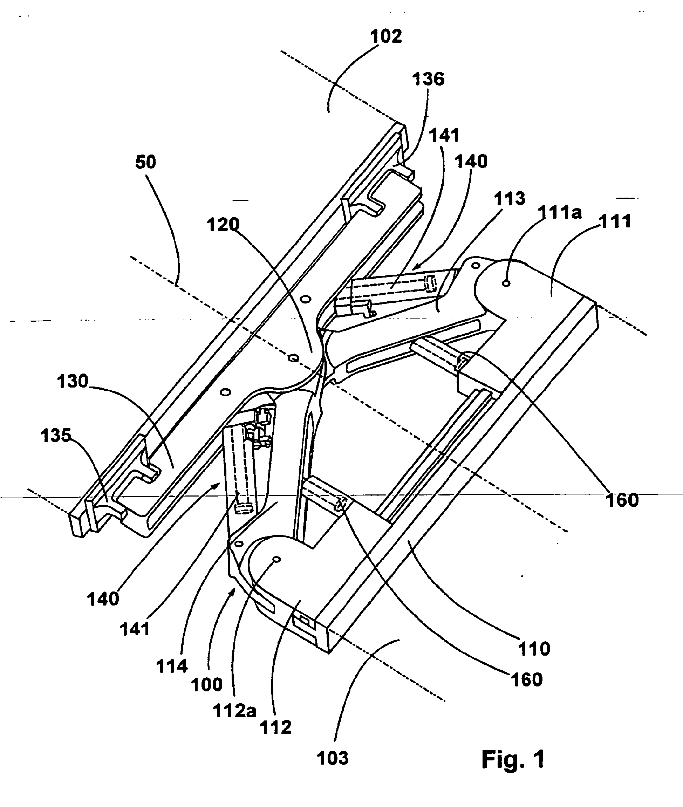

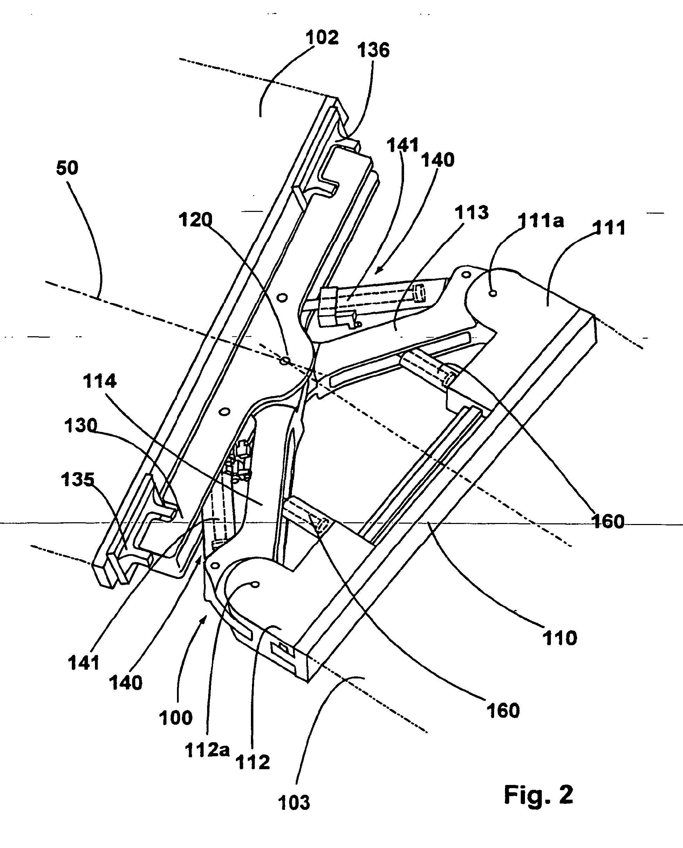

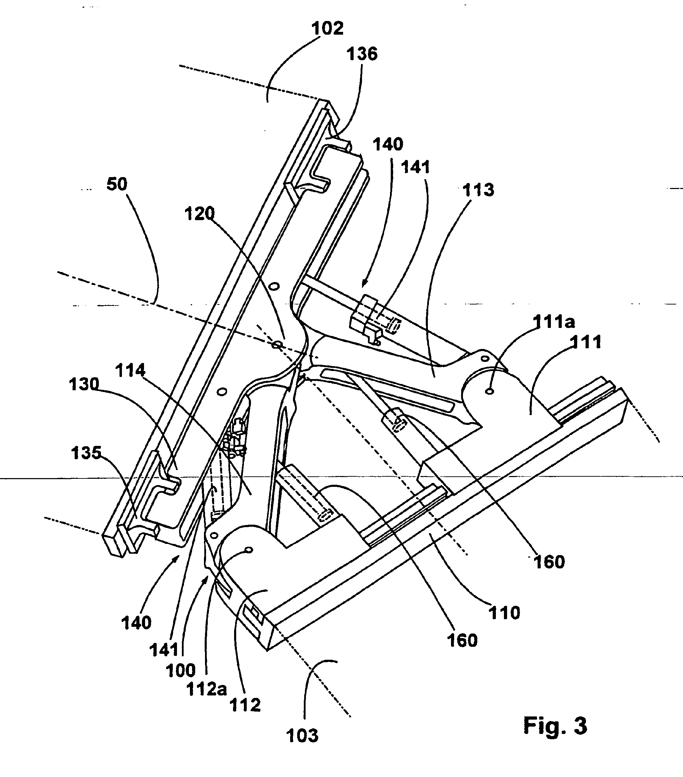

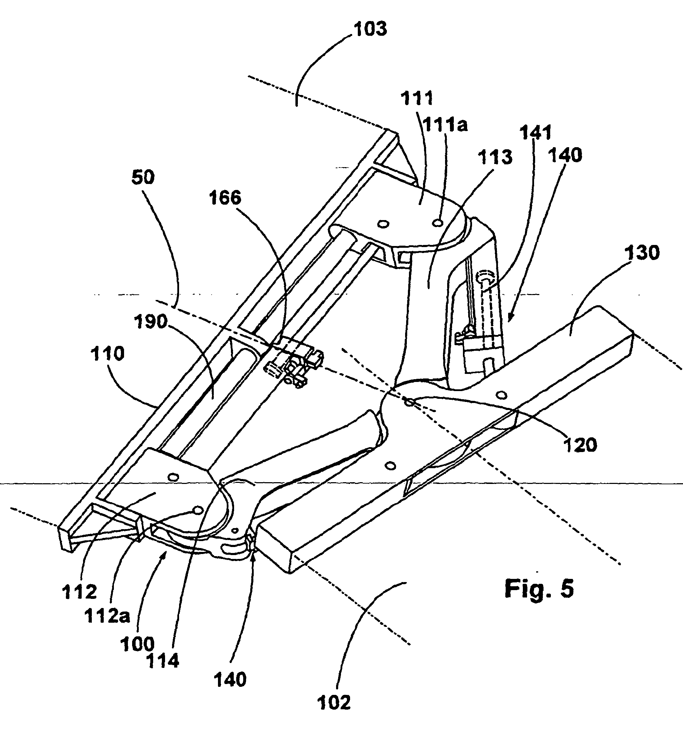

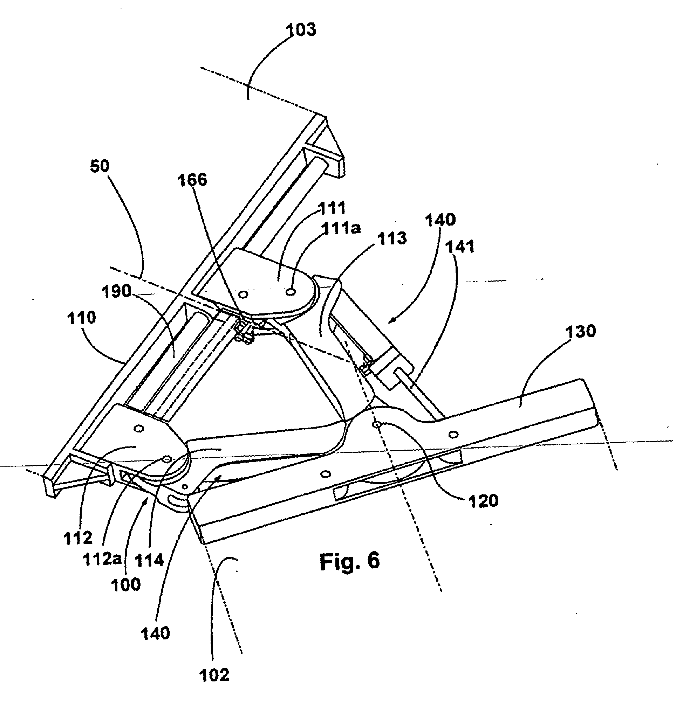

Die Konsolführung 110 ist bei der Ausführungsform gemäß der Figuren 1 bis 6 als reine Horizontalführung für die Schlitten 111 und 112 ausgebildet. Insofern ist, wie bereits an anderer Stelle erläutert, erforderlich, dass die Schwenklager 135, 136 eine Vertikalbewegung zulassen.

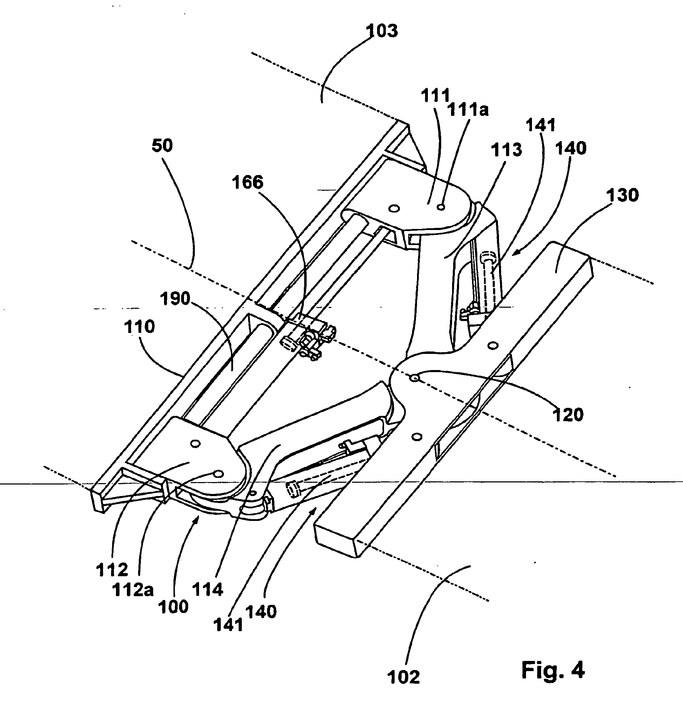

Das Gelenk gemäß den Figuren 4 bis 6 unterscheidet sich von der Gelenkvorrichtung gemäß der Figuren 1 bis 3 u.a. dadurch, dass die Konsolführung 110 eine Rundführung 190 für die Schlitten 111, 112 aufweist, so dass die Konsole 130 unmittelbar, d. h. ohne die Schwenklager 135, 136 an dem Vorderwagen 102 angeordnet werden kann. Darüber hinaus ist bei dieser Gelenkvorrichtung anstelle der beiden Dämpfungsglieder 160 ein Dämpfungsglied 166 vorgesehen, das unmittelbar zwischen den beiden Schlitten 111, 112 angeordnet ist. Die Funktion dieses Dämpfungsgliedes 166 entspricht der der Dämpfungsglieder 160 bei der Ausführungsform gemäß der Fig. 1 bis 3. Gleiche Gegenstände sind bei den beiden Ausführungsformen auch mit den gleichen Bezugszeichen, versehen.

## Patentansprüche

1. Gelenkvorrichtung zwischen zwei Fahrzeugen oder Fahrzeugteilen, z. B, einem Gelenkbus oder einem Schienenfahrzeug, wobei das Gelenkvorrichtung (100) mindestens zwei Gelenkglieder (111a, 112a) aufweist, die beabstandet zur Mittellängsachse des Fahrzeuges (102, 103) angeordnet sind sowie mindestens einen, vorzugsweise zwei Gelenkarme (113, 114), der bzw. die um die beiden Gelenkglieder drehbar gelagert sind,
**dadurch gekennzeichnet,**
**dass** die Gelenkglieder (111 a, 112a) jeweils durch einen Schlitten quer zur Mittellängsachse (50) des Fahrzeuges verschieblich aufnehmbar sind, wobei der Schlitten durch eine Konsolführung mit dem einen Fahrzeug oder Fahrzeugteil verbunden ist, wobei die beiden Gelenkarme (113, 114) an ihrem anderen Ende mit dem anderen Fahrzeug oder Fahrzeugteil durch ein Drehgelenk (120) verbunden sind, das in der Mittellängsachse (50) des Fahrzeuges angeordnet ist.

2. Gelenkvorrichtung nach Anspruch 1,
**dadurch gekennzeichnet,**
**dass** die Konsolführung (110) eine Rundführung (190) aufweist, wobei der Schlitten (111, 112) durch die Rundführung (190) vertikal verschwenkbar aufnehmbar ist.

3. Gelenkvorrichtung nach Anspruch 1,
**dadurch gekennzeichnet,**
**dass** zwischen Schlitten (111, 112) und Gelenkarm (113, 114) ein Dämpfungsglied (160) vorgesehen ist.

4. Gelenkvorrichtung nach Anspruch 1,
**dadurch gekennzeichnet,**
**dass** zwischen den beiden Gelenkarmen (113, 114) ein Dämpfungsglied (166) angeordnet ist.

5. Gelenkvorrichtung nach Anspruch 1,
**dadurch gekennzeichnet,**
**dass** das Dämpfungsglied (166) zwischen den Schlitten (111, 112) angeordnet ist.

6. Gelenkvorrichtung nach Anspruch 1,
**dadurch gekennzeichnet,**
**dass** an dem anderen Fahrzeug oder Fahrzeugteil (102) eine Konsole (130) für das Drehgelenk (120) angeordnet ist.

7. Gelenkvorrichtung nach Anspruch 1,
**dadurch gekennzeichnet,**
**dass** zur Dämpfung der Pendelbewegung der Gelenkarme (113, 114) um die Gelenkglieder (111a, 112a) eine Dämpfungseinrichtung (140) vorgesehen ist.

8. Gelenkvorrichtung nach Anspruch 7,
**dadurch gekennzeichnet,**
**dass** die Dämpfungseinrichtung (140) mindestens einen Dämpfer (141) umfasst, der einerseits mit dem Gelenkarm (113, 114) und andererseits mit dem Fahrzeug (102) bzw. Fahrzeugteil oder der Konsole (130) verbunden ist.

9. Gelenkvorrichtung nach Anspruch 8,
**dadurch gekennzeichnet,**
**dass** die Konsole (130) derart ausgebildet ist, dass der Dämpfer (141) bei Schwenkbewegungen des Gelenkes (100) in die Konsole (130) oder den Gelenkarm (113, 114) eintaucht.

10. Gelenkvorrichtung nach Anspruch 1,
**dadurch gekennzeichnet,**
**dass** die Gelenkarme (113, 114) winklig auf das Drehgelenk (120) zulaufend an dem Schlitten (111, 112) angeordnet sind.

11. Gelenkvorrichtung nach Anspruch 6,
**dadurch gekennzeichnet,**
**dass** die Konsole (130) um eine horizontale Achse (135, 136) verschwenkbar an dem Fahrzeug oder Fahrzeugteil (102) angelenkt ist.

12. Gelenkvorrichtung nach Anspruch 1,
**dadurch gekennzeichnet,**
**dass** der Schlitten (111, 112) eine elastische Gleitbuchse zur Aufnahme durch die Rundführung (190) aufweist.

13. Gelenkvorrichtung nach Anspruch 6,
**dadurch gekennzeichnet,**
**dass** die Konsole (130) bzw. die Konsolführung (110) ein Querträger des Rahmens des Fahrzeuges bzw. Fahrzeugteiles (102, 103) ist.

14. Gelenkfahrzeug, z. B. Gelenkbus oder Schienenfahrzeug, bei dem einzelne Fahrzeugteile durch eine Gelenkvorrichtung miteinander verbunden sind,
**dadurch gekennzeichnet,**
**dass** die Gelenkvorrichtung (100) gemäß einem oder mehrerer der vorstehenden Ansprüche 1 bis 13 ausgebildet ist.

## Claims

1. A joint apparatus between two vehicles or vehicle parts such as an articulated bus or a railcar for example, said joint apparatus (100) being provided with at least two joint members (111a, 112a) that are held apart from the central longitudinal axis of the vehicle (102, 103) and with at least one, preferably two, joint arms (113, 114) that is/are carried so as to be capable of rotating about said two joint members,
**characterized in**
**that** said joint members (111a, 112a) are each receivable by a cradle so as to be slidable across the central longitudinal axis (50) of the vehicle, said cradle being connected to the one vehicle or vehicle part by a bracket guiding device, said two joint arms (113, 114) being connected at their other end to the other vehicle or vehicle part by means of a swivel joint (120) that is arranged in the central longitudinal axis (50) of the vehicle.

2. The joint apparatus as set forth in claim 1,
**characterized in**
**that** the bracket guiding device (110) is provided with a round guiding facility (190), the cradle (111, 112) being receivable by the round guiding facility (190) in such a manner that it is vertically pivotal.

3. The joint apparatus as set forth in claim 1,
**characterized in**
**that** an attenuating member (160) is provided between cradle (111, 112) and joint arm (113, 114).

4. The joint apparatus as set forth in claim 1,
**characterized in**
**that** an attenuating member (166) is arranged between the two joint arms (113, 114).

5. The joint apparatus as set forth in claim 1,
**characterized in**
**that** the attenuating member (166) is arranged between the cradles (111,112).

6. The joint apparatus as set forth in claim 1,
**characterized in**
**that** a bracket (130) for the swivel joint (120) is arranged on the other vehicle or vehicle part (102).

7. The joint apparatus as set forth in claim 1,
**characterized in**
**that** an attenuating device (140) is provided to attenuate the oscillating movement of the joint arms (113, 114) about the joint members (111a, 112a).

8. The joint apparatus as set forth in claim 7,
**characterized in**
**that** the attenuating device (140) is comprised of at least one attenuator (141) that is connected to the joint arm (113, 114) on the one hand and to the vehicle (102) or vehicle part respectively or to the bracket (130) on the other hand.

9. The joint apparatus as set forth in claim 8,
**characterized in**
**that** the bracket (130) is configured in such a manner that, when the joint (100) is pivoting, the attenuator (141) plunges into the bracket (130) or into the joint arm (113, 114).

10. The joint apparatus as set forth in claim 1,
**characterized in**
**that** the joint arms (113, 114) are arranged on the cradle (111, 112) in such a manner that they are angularly inclined toward the swivel joint (120).

11. The joint apparatus as set forth in claim 6,
**characterized in**
**that** the bracket (130) is linked to the vehicle or vehicle part (102) in such a manner that it is pivotal about a horizontal axle (135, 136).

12. The joint apparatus as set forth in claim 1,
**characterized in**
**that** the cradle (111, 112) is provided with an elastic guide bush for receipt through the round guiding facility (190).

13. The joint apparatus as set forth in claim 6,
**characterized in**
**that** the bracket (130) or the bracket guiding device (110) is a transverse beam of the vehicle's or vehicle part's (102, 103) frame.

14. An articulated vehicle e.g., an articulated bus or railbound vehicle wherein the various vehicle parts are joined together by a joint apparatus,
**characterized in**
**that** said joint apparatus (100) is configured as set forth in one or more of the afore mentioned claims 1 through 13.

## Revendications

1. Dispositif d'articulation (100) entre deux véhicules ou parties de véhicule, p.ex. d'un bus articulé ou d'un véhicule sur rails, du type comportant au moins deux éléments d'articulation (111 a, 112a) qui sont distants de l'axe longitudinal médian du véhicule (102, 103), et au moins un, de préférence deux, bras d'articulation (113, 114) qui est/sont montés mobiles en rotation autour des deux éléments d'articulation,
**caractérisé en ce**
**que** les éléments d'articulation (111a, 112a) sont aptes à être reçus, mobiles en coulissement en travers de l'axe longitudinal médian (50) du véhicule, par un chariot, le chariot étant relié à l'un des véhicules ou parties de véhicule par un guide console, les deux bras (113, 114) de l'articulation étant reliés par leur autre extrémité à l'autre véhicule ou partie de véhicule par l'intermédiaire d'une articulation pivotante (120) disposée dans l'axe longitudinal médian (50) du véhicule.

2. Dispositif d'articulation selon la revendication 1,
**caractérisé en ce**
**que** le guide console (110) comporte un guide rond (190), le chariot (111, 112) étant apte à être reçu, mobile en pivotement suivant la direction verticale, par le guide rond (190).

3. Dispositif d'articulation selon la revendication 1,
**caractérisé en ce**
**qu'**un élément d'amortissement (160) est prévu entre le chariot (111, 112) et le bras (113, 114) de l'articulation.

4. Dispositif d'articulation selon la revendication 1,
**caractérisé en ce**
**qu'**un élément d'amortissement (166) est interposé entre les deux bras (113, 114) de l'articulation.

5. Dispositif d'articulation selon la revendication 1,
**caractérisé en ce**
**que** l'élément d'amortissement (166) est interposé entre les chariots (111, 112).

6. Dispositif d'articulation selon la revendication 1,
**caractérisé en ce**
**qu'**une console (130) pour l'articulation pivotante (120) est disposé sur l'autre véhicule ou partie de véhicule (102).

7. Dispositif d'articulation selon la revendication 1,
**caractérisé en ce**
**qu'**un organe d'amortissement (140) est prévu pour amortir le mouvement oscillatoire des bras (113, 114) de l'articulation autour des éléments (111a, 112a) de l'articulation.

8. Dispositif d'articulation selon la revendication 7,
**caractérisé en ce**
**que** le dispositif d'amortissement (140) comprend au moins un amortisseur (141) qui est relié d'une part au bras (113, 114) de l'articulation et d'autre part au véhicule (102) ou à la partie de véhicule ou à la console (130).

9. Dispositif d'articulation selon la revendication 8,
**caractérisé en ce**
**que** la console (130) est réalisée de telle sorte que l'amortisseur (141) pénètre dans la console (130) ou dans le bras (113, 114) de l'articulation lors du pivotement de l'articulation (100).

10. Dispositif d'articulation selon la revendication 1,
**caractérisé en ce**
**que** les bras (113, 114) de l'articulation sont disposés sur le chariot (111, 112) de manière à former un angle aigu avec l'articulation pivotante (120).

11. Dispositif d'articulation selon la revendication 6,
**caractérisé en ce**
**que** la console (130) est articulée, mobile en pivotement autour d'un axe horizontal (135, 136), sur le véhicule ou la partie de véhicule (102).

12. Dispositif d'articulation selon la revendication 1,
**caractérisé en ce**
**que** le chariot (111, 112) comporte un manchon coulissant élastique destiné à être reçu par le guide rond (190).

13. Dispositif d'articulation selon la revendication 6,
**caractérisé en ce**
**que** la console (130) ou le guide console (110) est une traverse du châssis du véhicule ou de la partie de véhicule (102, 103).

14. Véhicule articulé, p.ex. d'un bus articulé ou d'un véhicule sur rails, dont les différentes parties de véhicule sont reliées ensemble par un dispositif d'articulation,
**caractérisé en ce**
**que** le dispositif d'articulation (100) est réalisé selon une ou plusieurs des revendications 1 à 13 précédentes.
